# EUROPEAN PATENT SPECIFICATION

(11) **EP 3 536 123 B1**
(45) Date of publication and mention of the grant of the patent: **08.07.2020**
(21) Application number: 17791682.2
(22) Date of filing: 30.10.2017
(51) Int. Cl.: H05B 6/12, H05B 6/06

(54) **INDUCTIVE COIL UNIT COMPRISING CONDUCTIVE LAYERS**
INDUKTIVE SPULE MIT LEITENDEN SCHICHTEN
UNITÉ DE BOBINE INDUCTIVE COMPRENANT DES COUCHES CONDUCTRICES

(30) Priority: 07.11.2016 TR 201615831
(43) Date of publication of application: 11.09.2019
(73) Proprietor: Arçelik Anonim Sirketi, 34445 Istanbul (TR); Innovel Danismanlik Ve Imalat Sanayi Ticaret Limited Sirketi, 06800 Ankara (TR)
(72) Inventor: DEMIR, Hilmi Volkan, 06800 Ankara (TR); KILIC, Veli Tayfun, 06800 Ankara (TR); UNAL, Emre, 06800 Ankara (TR)
(86) International application number: PCT/EP2017/077742
(87) International publication number: WO 2018/083058

(56) References cited:
- EP-A1- 1 437 920
- EP-B1- 1 811 812
- US-A1- 2006 124 631
- US-A1- 2010 282 737

## Description

The present invention relates to an inductive coil unit suitable for use in full surface induction heating cooking ranges on which cooking is performed with pots made of materials with low magnetic permeability, and high electrical conductivity such as aluminum or copper.

The use of cooking containers such as pots, etc. with low magnetic permeability (µᵣ) made of materials containing aluminum or copper with low magnetic properties, in induction heating cooking ranges, is known. The current induced in pots with low magnetic properties, is much lower than pots with high magnetic properties. In an induction heating cooking range using such pots, a small portion of the magnetic flux generated by the coils is trapped by the material of the pot, and therefore the heating efficiency is rather low. Since the conductivity of materials such as aluminum and copper, is high, they have a relatively low electrical resistance. Due to low electrical resistance, the induced current is transformed into a very small amount of thermal energy, desired temperatures cannot be reached, and as a result pots made of materials such as aluminum, copper, etc. cannot be heated by way of induction.

Heating pots made of materials such as aluminum, copper, etc. with low magnetic properties, by way of induction is only possible utilizing high amounts of power. A high intensity magnetic flux is generated by the coils as a result of operating the coils at high powers and currents of high values being flown through the coils. High intensity magnetic fluxes cause inducing currents of a higher amplitude than the current normally generated on the pot. Although the induced currents of high amplitudes make it possible to heat the pot by way of induction, since currents of higher levels than normally used with the coil and the pot, is flown and induced, these currents flowing in opposite directions to each other generate magnetic fluxes also in opposite directions to each other. This leads to the coil and the pot to repel each other similar to the same poles (N-N or S-S) of two magnets facing each other. If the buoyancy force applied by the coil to the pot is at a level close to the weight of the pot, the pot slides by moving and gets out of the boundaries of the heating region. This problem is defined as the buoyancy problem in the literature. Said problem is experienced more frequently with aluminum pots as aluminum has a lower material density than copper. The pot loses its position by sliding from the heating region defined on the induction heating cooking range table, heating cannot be performed, and noises are generated displeasing the user due to the pot hitting the induction heating cooking range table by falling.

Various solutions are suggested for the buoyancy problem in the state of the art. One of these solutions is placing electrically conductive layers between the coil and the pot. The conductive layers are also made of materials with low magnetic permeability and high conductivity, such as aluminum. The reason for this is to avoid the magnetic flux to be absorbed by the conductive layer, and to prevent the conductive layer from being over-heated due to the current induced thereon. Although the current induced by the conductive layer reduces the force lifting the pot, it causes the conductive layer to over-heat and creates loss of energy.

The conductive layers in the shapes and structures suggested in the known art in solution of the buoyancy problem experienced as a result of flowing high currents for induction heating of pots of aluminum, etc. with low magnetic permeability, have been designed for the conventional cooking ranges with burners, on which are specified the places on which the pots to be heated have to be placed, and they do not exhibit the same effect (efficiency, reduction of buoyancy) everywhere when used in full surface heaters as they do not have a periodical structure. The state of the art conductive layer structures have large sizes as they have been designed for large-sized conventional coils, and they are not intended for use in full surface induction heating cooking ranges. In addition, applying phase difference between the coils in full surface cooking ranges can provide an efficiency increase, however, state of the art conductive layer structures are not designed for cases in which phase difference is applied.

United States patents no. US7049563 (B2), and US7057144 (B2), and European patent no. EP1811812 (B1), disclose electrically conductive layer structures used in induction heaters and reducing the buoyancy force applied to the heated cooking container.

European patent no. EP2173137 (B1) mentions a buoyancy reducing plate reducing said buoyancy problem.

Document US2006/124631 discloses an inductive coil unit according to the prior art.

The aim of the present invention is to realize an inductive coil unit suitable for use in full surface induction heating cooking ranges, comprising conductive layers eliminating the buoyancy problem occurring during heating of the pots made of materials with low magnetic permeability.

The inductive coil unit realized to achieve the aim of the present invention, and disclosed in the first claim and the dependent claims, comprises conductive layers preferably placed on a lower surface of a table so as to be between the coils enabling full surface heating and the pot, made of material with low magnetic permeability and high electrical conductivity, having a plurality of segments of symmetrical structure adjacent to each other, and forming a periodical array along horizontal and vertical directions defining the table plane and eliminating the buoyancy problem. The buoyancy problem occurring during heating of the pots is eliminated by means of the conductive layers comprising segments having periodical arrangement, and the conductive layers exhibit the same effect at almost entirety of the table plane thanks to the periodical structure.

In an embodiment of the invention, the conductive layer comprises four segments arranged symmetrical and quadrilateral with respect to horizontal and vertical directions, a central cut-out of circular shape provided in its center, four side cut-outs of semi-circular shape opening from the middle portions of its four outer edges to the center, and four corner cut-outs of quadrant shape located at each corner.

In another embodiment of the invention, the conductive layer has a multi-part - discontinuous structure and is suitable for use in full surface induction heating cooking ranges in which 0° phase difference is applied between the coils, i.e. the coils are driven in the same phase, wherein the segments are arranged split from each other.

In another embodiment of the invention, the conductive layer has a multi-part structure and is suitable for use in full surface induction heating cooking ranges in which 0° or 180° phase difference is applied between the coils, wherein only the ends of the horizontal, vertical and diagonal slits are joined in the middle points of the edges without making side cut-outs.

In another embodiment of the invention, the conductive layer comprises a filling material made of a thermally-electrically insulating thermoplastic material without magnetic properties, enabling joining of the segments by filling the horizontal, vertical and the diagonal slits and/or the central, side and the corner cut-outs, and rendering the conductive layer single-parted (continuous).

In another embodiment of the invention, the conductive layer has a single-part - continuous structure comprising bridges joining the segments and is suitable for use in full surface induction heating cooking ranges in which 180° phase difference is applied between the coils.

The conductive layers of the invention enable pots with low magnetic permeability, to be heated in the inductive coil unit having coils arranged side-by-side, and driven in the same phase or with 180° phase difference, without the buoyancy problem and reducing the noises displeasing the user.

The inductive coil unit realized to achieve the aim of the present invention is illustrated in the accompanying drawings, wherein:

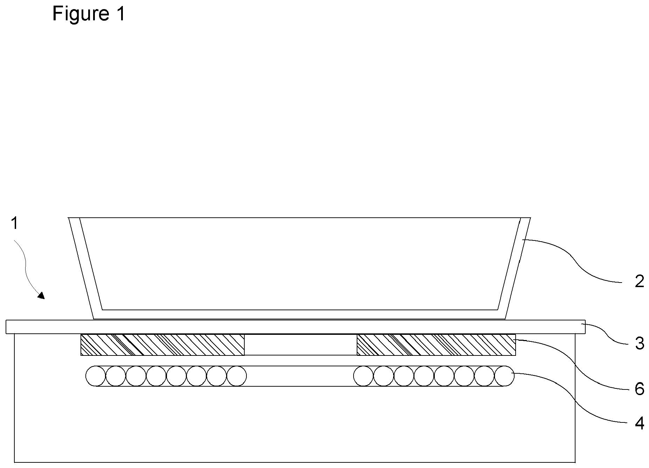

Figure 1 is a schematic view of an induction heating cooking range using the inductive coil unit of the invention.
Figure 2 is a schematic view of the coil series provided in an inductive coil unit.
Figure 3 is a schematic view of the conductive layer series used in an inductive
   coil unit.
Figure 4 is a schematic view of a conductive layer having a multi-part structure.
Figure 5 is a schematic view of a conductive layer having a multi-part structure in an embodiment of the invention.
Figure 6 is a schematic view of a conductive layer having a multi-part structure in another embodiment of the invention.
Figure 7 is a schematic view of a conductive layer having a multi-part structure, to which a filling material is added.
Figure 8 is a schematic view of a conductive layer having a single part structure.
Figure 9 is a schematic view of a conductive layer having a single part structure in another embodiment of the invention.

The elements in the figures are numbered individually or have been given letter references and the correspondence of these references are given hereinafter.
1. Inductive coil unit
2. Pot
3. Table
4. Coil
5. Segment
6. Conductive layer
7. Central cut-out
8. Side cut-out
9. Corner cut-out
10. Horizontal slit
11. Vertical slit
12. Diagonal slit
13. Filling material
14. Bridge

X: Horizontal direction on the table plane of the induction heating cooking range
Y: Vertical direction on the table plane of the induction heating cooking range

The inductive coil unit (1) suitable for use in full surface induction heating cooking ranges comprising a glass-ceramic table (3) on which cooking containers such as pots (2), etc. made of materials containing aluminum or copper with low magnetic permeability, comprises a plurality of coils (4) adjacent to each other and magnetically interacting with each other, arranged on the same alignment so as to cover almost the entire table (3) plane, each driven with the same phase (0°) or with 180° phase difference with respect to its adjacent other.

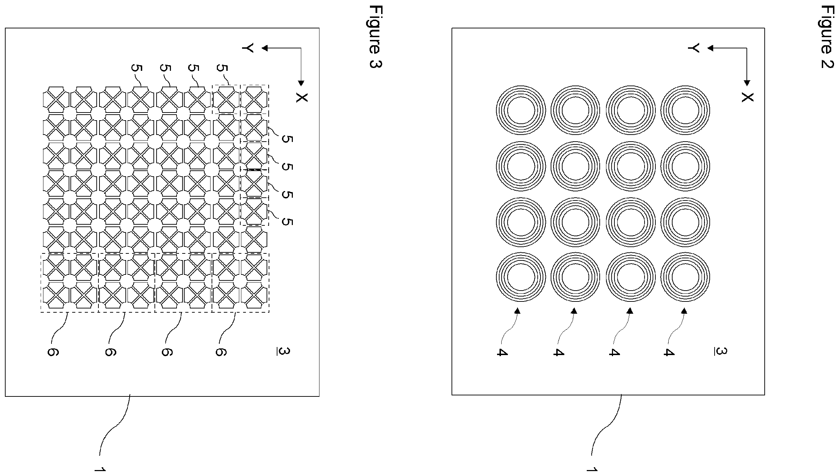

The inductive coil unit (1) of the invention comprises at least one conductive layer (6) placed preferably on the lower surface of the table (3) so as to be between the coils (4) and the pot (2) and made of a material with low magnetic permeability and high electrical conductivity, preferably made of aluminum, and having a plurality of segments (5) placed side-by-side along the horizontal and vertical directions (X, Y) forming reference for the quadrilateral or trigonal coil arrangement defining the table (3) plane, having a symmetrical structure adjacent to each other, and forming a periodical (repetitive) array along said horizontal and vertical directions (X, Y), enabling elimination of the buoyancy problem occurring during heating of the pots (2) with low magnetic permeability (Figure 3).

The buoyancy problem occurring during heating of the pots (2) is eliminated in the inductive coil unit (1) having coils (4) enabling full surface heating, by means of the conductive layers (6) comprising segments (5) having periodical arrangement. The conductive layers (6) exhibit the same effect at almost the entirety of the table (3) plane thanks to the periodical structure.

In an embodiment of the invention, the conductive layer (6) comprises four segments (5) arranged symmetrical and quadrilateral with respect to vertical and horizontal directions (X, Y), and a central cut-out (7) of circular shape provided in its center, located aligned with the winding opening in the center of the coil (4), not coinciding with the windings of the coil (4). The central cut-out (7) prevents over-heating of the conductive layer (6), and also facilitates placement of a heat sensor (not shown in figures) to the winding opening in the middle of the coil (4).

In another embodiment of the invention, the conductive layer (6) comprises four segments (5) arranged symmetrical and quadrilateral with respect to vertical and horizontal directions (X, Y), and four side cut-outs (8) of semi-circular shape opening from the central portions of its four outer edges to the center.

In another embodiment of the invention, the conductive layer (6) comprises four segments (5) arranged symmetrical and quadrilateral with respect to vertical and horizontal directions (X, Y), and four corner cut-outs (9) of quadrant shape located on its each corner.

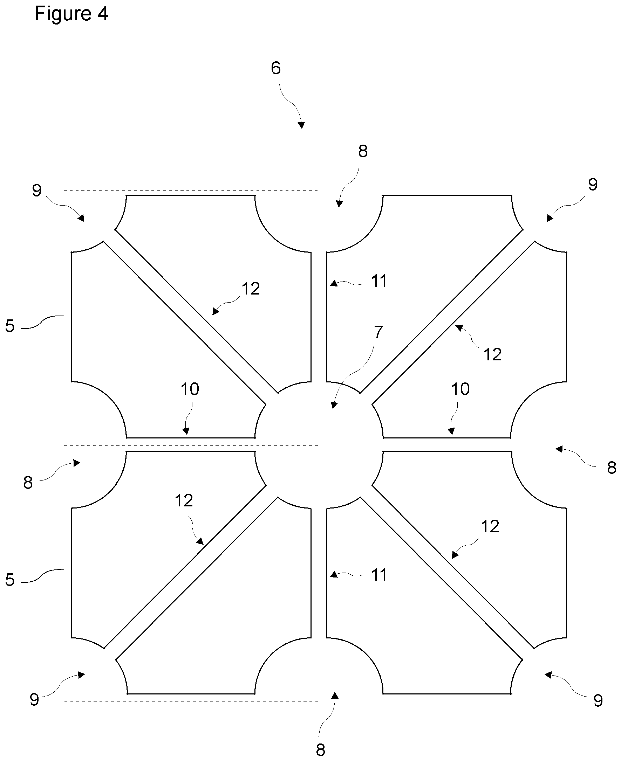

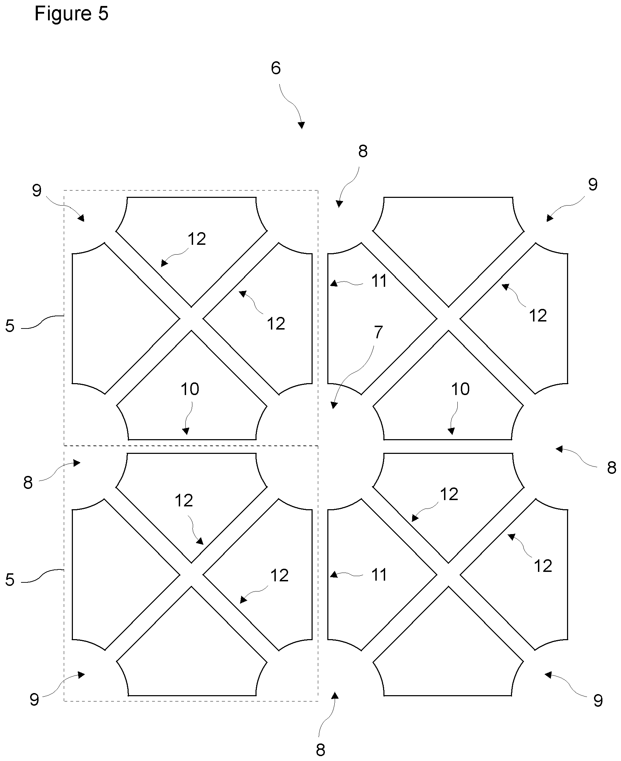

In another embodiment of the invention, the conductive layer (6) has a multi-part - discontinuous structure and is suitable for use in full surface induction heating cooking ranges in which 0° phase difference is applied between the coils (4) (the coils (4) having been driven in the same phase), wherein the segments (5) are arranged split from each other. In this embodiment, the conductive layer (6) comprises at least two horizontal slits (10) and at least two vertical slits (11) extending in horizontal direction (X) and in vertical direction (Y) between the segments (5), and splitting the segments (5), and at least four diagonal slits (12) extending in direction of at least one diagonal line of each segment (5), and rendering each segment (5) multi-parted (Figure 4, Figure 5).

In multi-part conductive layer (6) structure, eddy currents of high amplitude do not pass from one segment (5) to the other, and therefore the coupling of the conductive layer (6) with the coil (4), in other words the inductance-resistance variations between the coil (4) and the conductive layer (6) are reduced. The conductive layer (6) is prevented from creating energy loss by over-heating. The widths of the horizontal, vertical and the diagonal slits (10, 11, 12) between the segments (5), and/or the diameters of the central, side and the corner cut-outs (7, 8, 9) can be increased and decreased so as to maintain the heating of the conductive layer (6) due to the coupling effect between the coil (4) and the conductive layer (6) at a minimum. In order to eliminate the buoyancy problem of the conductive layer, the total volume of the "full" portions besides the horizontal, vertical and the diagonal slits (10, 11, 12) and the central, side and the corner cut-outs (7, 8, 9), is ensured not to fall below a limit value, and the thickness is ensured not to exceed a limit value,. The optimum dimensions of the conductive layer (6) is determined through experimental studies so as to provide desired magnetic absorption.

In another embodiment of the invention, the conductive layer (6) comprises four diagonal slits (12) extending in radial direction from the central cut-out (7) to the corner cut-outs (8), in direction of a single diagonal line of each segment (5), and splitting each segment (5) into two pieces (Figure 4).

In a preferred embodiment of the invention, the conductive layer (6) has a multi-part structure and is suitable for use in full surface induction heating cooking ranges in which 0° phase difference is applied between the coils (4), and comprises eight diagonal slits (12) extending in direction of both diagonal lines of the segment (5), and splitting the segments (5) into four pieces. The heating of the conductive layer (6) is observed to decrease significantly when the width size of the diagonal slits (12) are increased so as not to affect magnetic absorption (Figure 5).

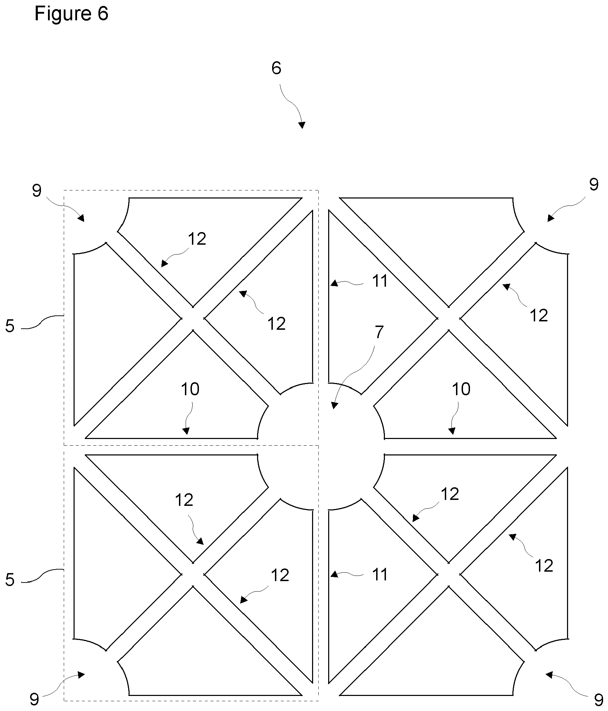

In another preferred embodiment of the invention, the conductive layer(6) has a multi-part structure and is suitable for use in full surface induction heating cooking ranges in which 0° or 180° phase difference is applied between the coils (4), wherein the segments (5) are arranged split from each other, and only the ends of the horizontal, vertical and diagonal slits (10, 11, 12) are joined in the middle points of the edges without making side cut-outs (8). The multi-part structure prevents over-heating of the conductive layer (6), making usage with side-by-side coils driven with 0° phase difference, convenient. The high magnetic field strength between two side-by-side coils (4) driven with 180° phase difference, is absorbed thanks to the places of the side cut-outs (8) used in previous embodiments being "full," and the buoyancy problem is eliminated (Figure 6).

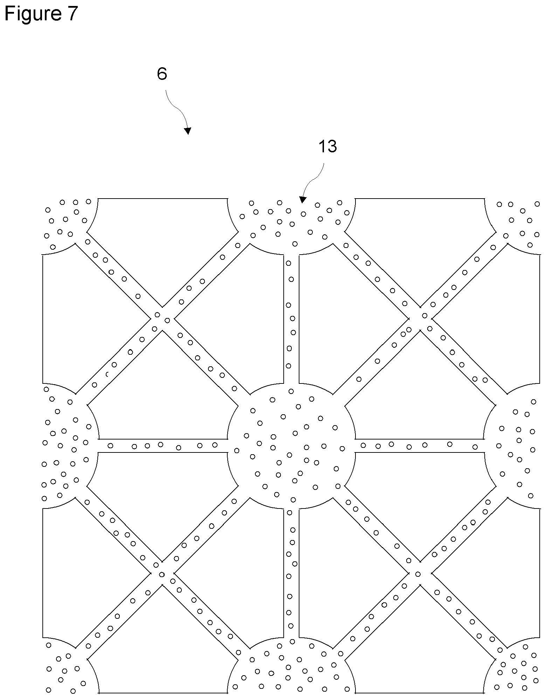

In another embodiment of the invention, the conductive layer (6) comprises a filling material (13) made of a thermally-electrically insulating thermoplastic polymer based material without magnetic properties such as preferably polypropylene (PP) or polystrene (PS) (styrofoam, foam), enabling joining of the segments (5) by filling the horizontal, vertical and the diagonal slits (10, 11, 12) and/or the central, side and the corner cut-outs (7, 8, 9), and rendering the conductive layer (6) single-parted (continuous) (Figure 7).

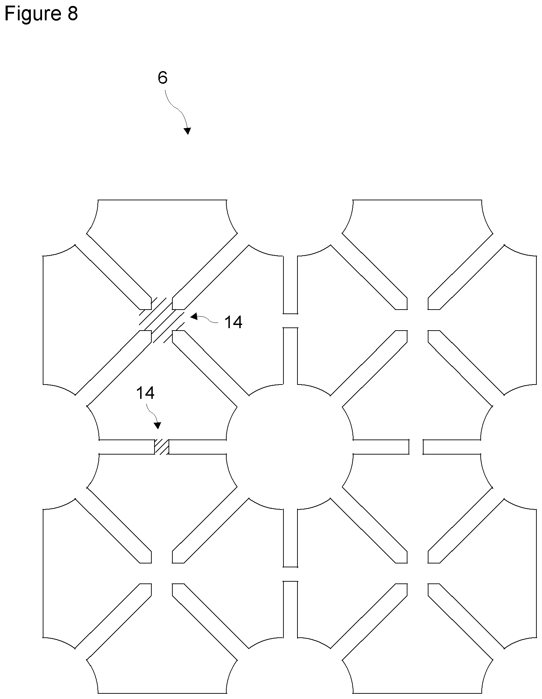

In another embodiment of the invention, the conductive layer (6) has a single-part - continuous structure and is suitable for use in full surface induction heating cooking ranges in which 180° phase difference is applied between the coils (4), and comprises bridges (14) joining the segments (5) and the segment (5) pieces to each other. In this embodiment, the conductive layer (6) comprises bridges (14) joining the segments (5) and the segment (5) pieces to each other in horizontal and vertical directions (X, Y), in addition to the horizontal, vertical and the diagonal slits (10, 11, 12) and the central, side and the corner cut-outs (7, 8, 9) of the previous embodiments. Even though the heating in the conductive layer (6) of single-part in which the segments (5) and the segment (5) pieces are joined by bridges (14), is much higher than the multi-part structure, the buoyancy problem is eliminated by absorbing the high magnetic field strength formed by side-by-side coils (4) driven with 180° phase difference (Figure 8).

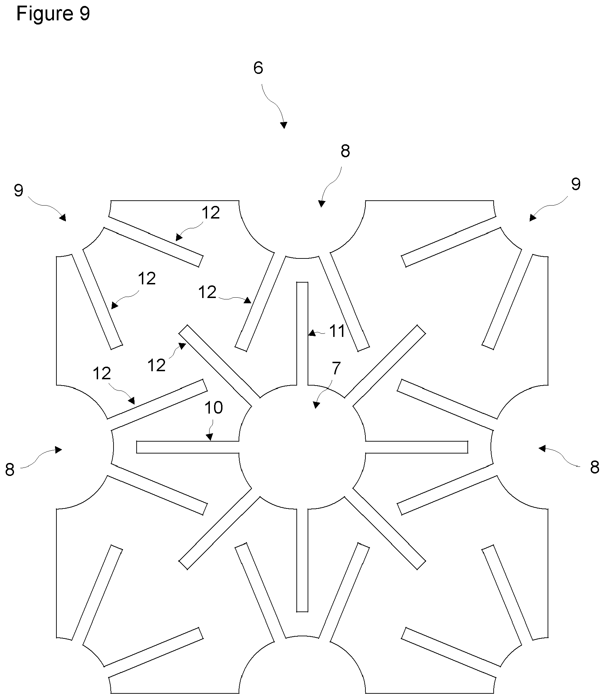

In another embodiment of the invention, the conductive layer (6) has a single-part - continuous structure in which the segments (5) are arranged connected to each other like the previous embodiment, and comprises diagonal slits (12) extending in different angle directions from the diagonal lines and not intersecting each other and thus maintaining the single-part structure (Figure 9).

The conductive layer (6) structures suggested in the invention exhibit almost the same effect (decrease of buoyancy) on the entire region of the table (3) surface in full surface induction heating cooking ranges, due to the fact that they are periodical. The conductive layer (6) is primarily designed for small-sized coils (4), and is suitable for full surface induction heating cooking ranges. The suggested conductive layer (6) structures can be used with large-sized coils (4) by being enlarged. In addition, conductive layer (6) structures of different geometries providing the ideal solution are suggested for applications in which the side-by-side coils (4) are driven with both 0° (same phase) and 180° phase difference. The conductive layers (6) of the invention enable efficient and rapid heating of the pots (2) made of materials without magnetic properties such as aluminum in new generation full surface induction heating cooking ranges, without buoyancy problem.

## Claims

1. An inductive coil unit (1) suitable for use in full surface induction heating cooking ranges, comprising a table (3) on which pots (2) made of materials having low magnetic permeability are placeable the coil unit (1) **comprising** a plurality of coils (4) adjacent to each other and magnetically interacting with each other, arranged so as to cover almost the entire table (3) plane, each driven with the same phase (0°) or with 180° phase difference with respect to its adjacent other, **characterized by** at least one conductive layer (6) placed between the coils (4) and the table (3) and made of material with low magnetic permeability and high electrical conductivity, the conductive layer being formed by a plurality of segments (5) placed side-by-side along the horizontal and vertical directions (X, Y) forming reference for the quadrilateral or trigonal coil arrangement defining the table (3) plane, having a symmetrical structure adjacent to each other, and forming a periodical array along said horizontal and vertical directions (X, Y).

2. An inductive coil unit (1) according to claim 1 **characterized by** a conductive layer (6) comprising four segments (5) arranged symmetrical and quadrilateral with respect to vertical and horizontal directions (X, Y), and a central cut-out (7) of circular shape provided in its center, located aligned with the winding opening in the center of the coil (4), not coinciding with the windings of the coil (4).

3. An inductive coil unit (1) according to claim 1 or 2, **characterized by** the conductive layer (6) comprising four segments (5) arranged symmetrical and quadrilateral with respect to vertical and horizontal directions (X, Y), and four side cut-outs (8) of semi-circular shape opening from the central portions of its four outer edges to the center.

4. An inductive coil unit (1) according to claim 1 or 2, **characterized by** the conductive layer (6) comprising four segments (5) arranged symmetrical and quadrilateral with respect to vertical and horizontal directions (X, Y), and four corner cut-outs (9) of quadrant shape located on each corner.

5. An inductive coil unit (1) according to claim 1 or 2, **characterized by** the conductive layer (6) of multi-part - discontinuous structure, suitable for use in full surface induction heating cooking ranges in which 0° phase difference is applied between the coils (4), wherein the segments (5) are arranged separate from each other.

6. An inductive coil unit (1) according to claim 5, **characterized by** the conductive layer (6) comprising at least two horizontal slits (10) and at least two vertical slits (11) extending in horizontal direction (X) and in vertical direction (Y) between the segments (5), and separating the segments (5), and at least four diagonal slits (12) extending in direction of at least one diagonal line of each segment (5).

7. An inductive coil unit (1) according to claim 5 or 6, **characterized by** the conductive layer (6) comprising four diagonal slits (12) extending in radial direction from the central cut-out (7) to the corner cut-outs (8), in direction of a single diagonal line of each segment (5), and splitting each segment (5) into two pieces.

8. An inductive coil unit (1) according to claim 5 or 6, **characterized by** the conductive layer (6) comprising eight diagonal slits (12) extending in direction of both diagonal lines of the segment (5), and splitting the segments (5) into four pieces.

9. An inductive coil unit (1) according to claim 5 or 6, **characterized by** the conductive layer (6) of multi-part structure, suitable for use in full surface induction heating cooking ranges in which 0° or 180° phase difference is applied between the coils (4), wherein the ends of the horizontal, vertical and diagonal slits (10, 11, 12) are joined in the middle points of the edges without making side cut-outs (8).

10. An inductive coil unit (1) according to any one of the preceding claims, **characterized by** the conductive layer (6) comprising a filling material (13) made of a thermally-electrically insulating polymer based material without magnetic properties, enabling joining of the segments (5) by filling the horizontal, vertical and the diagonal slits (10, 11, 12) and/or the central, side and the corner cut-outs (7, 8, 9).

11. An inductive coil unit (1) according to claim 10, **characterized by** the conductive layer (6) comprising filling material (13) made of a thermoplastic material such as polypropylene (PP) or polystyrene (PS).

12. An inductive coil unit (1) according to claim 1 or 2, **characterized by** the conductive layer (6) suitable for use in full surface induction heating cooking ranges in which 180° phase difference is applied between the coils (4), the conductive layer (6) having a single-part - continuous structure and comprising bridges (14) joining the segments (5) and the segment (5) pieces to each other.

13. An inductive coil unit (1) according to claim 12, **characterized by** the conductive layer (6) comprising diagonal slits (12) of single-part structure, extending in separate angle directions from the diagonal lines and not intersecting each other.

14. A full surface induction heating cooking range **characterized by** an inductive coil unit (1) according to any one of the preceding claims.

## Patentansprüche

1. Eine induktive Spuleinheit (1), die für die Verwendung in Volloberflächen-Induktionsheizkochbereichen geeignet ist, **umfasst** eine Platte (3), auf dessen Töpfe (2) aus Materialien mit geringer magnetischer Permeabilität gestellt werden, darüber hinaus umfasst die Spuleneinheit (1) mehrere nebeneinander liegende und magnetisch miteinander wechselwirkende Spulen (4), die auf der gleichen Ausrichtung angeordnet sind, um fast die gesamte Ebene der Platte (3) abzudecken, wobei diese jeweils mit der gleichen Phase (0 °)angetrieben werden oder mit einer Phasendifferenz von 180°, in Bezug auf seinen Nachbarn, **gekennzeichnet ist sie dadurch,** dass mindestens eine leitende Schicht (6) zwischen den Spulen (4) und dem Topf (2) angeordnet ist und aus einem Material mit geringer magnetischer Permeabilität und hoher Leitfähigkeit besteht und mehrere Segmente (5) aufweist, die nebeneinander entlang der horizontalen und vertikalen Richtung (X, Y) angeordnet sind und die Referenz für die viereckige oder trigonale Spulenanordnung bilden, die die Ebene der Platte (3) definiert, mit einer symmetrischen Struktur neben jeder andere und Bilden einer periodischen Anordnung entlang der horizontalen und vertikalen Richtung (X, Y).

2. Eine induktive Spuleinheit (1), **wie in Anspruch 1 aufgeführt,** ist **dadurch gekennzeichnet, dass** eine leitende Schicht (6) vier Segmente (5) umfasst, die symmetrisch und viereckig in Bezug auf vertikale und horizontale Richtungen (X, Y) angeordnet sind und einen zentralen Ausschnitt (7) von kreisförmiger Form, der in seiner Mitte vorgesehen ist und mit der Wicklungsöffnung in der Mitte der Spule (4) ausgerichtet ist und nicht mit den Wicklungen der Spule (4) zusammenfällt.

3. Eine induktive Spuleinheit (1), **wie in Anspruch 1 oder 2 aufgeführt,** ist **dadurch gekennzeichnet, dass** die leitende Schicht (6) vier Segmente (5) umfasst, die symmetrisch und viereckig in vertikaler und horizontaler Richtung (X, Y) angeordnet sind, und vier seitliche Ausschnitte (8) von halbkreisförmiger Form, die sich von den Mittelabschnitten ihrer vier Außenkanten zur Mitte öffnen..

4. Eine induktive Spuleinheit (1), **wie in Anspruch 1 oder 2 aufgeführt,** ist **dadurch gekennzeichnet, dass** die leitende Schicht (6) vier Segmente (5) umfasst, die symmetrisch und viereckig in Bezug auf vertikale und horizontale Richtungen (X, Y) angeordnet sind, und vier Eckausschnitte (9) mit Quadratenform, die an jeder Ecke angeordnet sind.

5. Eine induktive Spuleinheit (1), **wie in Anspruch 1 oder 2 aufgeführt,** ist **dadurch gekennzeichnet, dass** die leitende Schicht (6) eine mehrteilige - diskontinuierliche Struktur umfasst, die geeignet ist für die Verwendung in Volloberflächen-Induktionsheizkochbereichen, in denen eine Phasendifferenz von 0 ° zwischen den Spulen (4) angelegt wird, wobei die Segmente (5) getrennt voneinander angeordnet sind.

6. Eine induktive Spuleinheit (1), **wie in Anspruch 5 aufgeführt,** ist **dadurch gekennzeichnet, dass** die leitende Schicht (6) mindestens zwei horizontale Schlitze (10) und mindestens zwei vertikale Schlitze (11) umfasst, die sich in horizontaler Richtung (X) und in vertikaler Richtung (Y) zwischen den Segmenten (5) erstrecken und die Segmente (5) und mindestens vier diagonale Schlitze (12), die sich in Richtung mindestens einer diagonalen Linie jedes Segments (5) erstrecken.

7. Eine induktive Spuleinheit (1), **wie in Anspruch 5 oder 6 aufgeführt,** ist **dadurch gekennzeichnet, dass** die leitende Schicht (6) vier diagonale Schlitze (12) umfasst, die sich in radialer Richtung vom zentralen Ausschnitt (7) zu den Eckausschnitten (8) in Richtung einer einzelnen diagonalen Linie jedes Segments (5) erstrecken und jedes Segment (5) in zwei Teile teilen.

8. Eine induktive Spuleinheit (1), **wie in Anspruch 5 oder 6 aufgeführt,** ist **dadurch gekennzeichnet, dass** die leitende Schicht (6) acht diagonale Schlitze (12) umfasst, die acht diagonale Schlitze (12) umfasst, die sich in Richtung beider diagonalen Linien des Segments (5) erstrecken und die Segmente (5) in vier Stücke teilen.

9. Eine induktive Spuleinheit (1), **wie in Anspruch** 5 **oder** 6 **aufgeführt,** ist **dadurch gekennzeichnet, dass** die leitende Schicht (6) eine mehrteilige Struktur aufweist, die geeignet für die Verwendung in Volloberflächen-Induktionsheizkochbereichen ist, in denen eine Phasendifferenz von 0 ° oder 180 ° zwischen den Spulen (4) angelegt wird, wobei die Enden der horizontalen, vertikalen und diagonalen Schlitze (10, 11, 12) in den Mittelpunkten der Kanten zusammengefügt werden, ohne seitliche Ausschnitte (8) zu erstellen.

10. Eine induktive Spuleinheit (1), **wie in den vorherigen Ansprüchen aufgeführt,** ist **dadurch gekennzeichnet, dass** die leitende Schicht (6) ein Füllmaterial (13) umfasst, das aus einem thermisch elektrisch isolierenden Material auf Polymerbasis ohne magnetische Eigenschaften hergestellt ist und das Verbinden der Segmente (5) durch Füllen der horizontalen, vertikalen und diagonalen Schlitze (10, 11, 12) und / oder der Mittel-, Seiten- und Eckausschnitte (7, 8, 9) ermöglicht.

11. Eine induktive Spuleinheit (1), **wie in Anspruch 10 aufgeführt,** ist **dadurch gekennzeichnet, dass** die leitende Schicht (6) Füllmaterial (13) aus einem thermoplastischen Material wie Polypropylen (PP) oder Polystyrol (PS) umfasst.

12. Eine induktive Spuleinheit (1), **wie in Anspruch 1 oder 2 aufgeführt,** ist **dadurch gekennzeichnet, dass** die leitende Schicht (6) für die Verwendung in Volloberflächen-Induktionsheizkochbereichen geeignet ist, in denen eine Phasendifferenz von 180 ° zwischen den Spulen (4) angelegt wird, wobei die leitende Schicht (6) eine einteilige - kontinuierliche Struktur aufweist und Brücken (14) umfasst, die die Segmente (5) und die Segmentstücke (5) miteinander verbinden.

13. Eine induktive Spuleinheit (1), **wie in Anspruch 12 aufgeführt,** ist **dadurch gekennzeichnet, dass** die leitende Schicht (6) diagonale Schlitze (12) mit einteiliger Struktur umfasst, die sich in getrennten Winkelrichtungen von den diagonalen Linien erstrecken und sich nicht schneiden.

14. Ein Vollflächen-Induktionsheizkochbereich ist durch eine Induktionsspuleneinheit (1) **gekennzeichnet,** die gemäß einem der vorhergehenden Ansprüche ist.

## Revendications

1. Une unité de bobines à induction (1) appropriée pour être utilisée dans des cuisinières à chauffage par induction à surface pleine, comprenant une table (3) sur laquelle sont placés des récipients (2) faits de matériaux ayant une faible perméabilité magnétique, l'unité de bobines (1) **comprenant** une pluralité de bobines (4) adjacentes les unes aux autres et interagissant magnétiquement les unes avec les autres, disposées sur le même alignement de manière à couvrir presque tout le plan de la table (3), chacune étant entraînée avec la même phase (0°) ou avec une différence de phase de 180° par rapport à son adjacente, **est caractérisé en ce qu'au** moins une couche conductrice (6) placée entre les bobines (4) et le récipient (2) et faite d'un matériau à faible perméabilité magnétique et à conductivité électrique élevée, et ayant une pluralité de segments (5) placés côte à côte le long des directions horizontale et verticale (X, Y) formant une référence pour l'agencement de bobines quadrilatéral ou trigonal définissant le plan du tableau (3), ayant une structure symétrique adjacente les uns aux autres, et formant un réseau périodique le long desdites directions horizontale et verticale (X, Y).

2. Une unité de bobine à induction (1) selon la déclaration 1 **est caractérisée en ce qu'elle** comporte une couche conductrice (6) comprenant quatre segments (5) disposés symétriquement et en quadrilatère par rapport aux directions verticale et horizontale (X, Y), et une découpe centrale (7) de forme circulaire prévue en son centre, située dans l'alignement de l'ouverture d'enroulement au centre de la bobine (4), ne coïncidant pas avec les enroulements de la bobine (4).

3. Une unité de bobine à induction (1) selon la déclaration 1 ou 2, **est caractérisée en ce que** la couche conductrice (6) comprend quatre segments (5) disposés symétriquement et en quadrilatère par rapport aux directions verticale et horizontale (X, Y), et quatre découpes latérales (8) de forme semi-circulaire s'ouvrant depuis les parties centrales de ses quatre bords extérieurs vers le centre.

4. Une unité de bobine à induction (1) selon la déclaration 1 ou 2, **est caractérisée en ce que** la couche conductrice (6) comprenant quatre segments (5) disposés symétriquement et en quadrilatère par rapport aux directions verticale et horizontale (X, Y), et quatre découpes d'angle (9) en forme de quadrant situées sur chaque angle.

5. Une unité de bobine à induction (1) selon la déclaration 1 ou 2, **est caractérisée en ce que** la couche conductrice (6) de structure discontinue en plusieurs parties, est appropriée pour être utilisée dans des cuisinières à chauffage par induction à surface entière dans lesquelles une différence de phase de 0° est appliquée entre les bobines (4), dans laquelle les segments (5) sont disposés séparément les uns des autres.

6. Une unité de bobine à induction (1) selon la déclaration 5, **est caractérisée en ce que** la couche conductrice (6) comprend au moins deux fentes horizontales (10) et au moins deux fentes verticales (11) s'étendant dans la direction horizontale (X) et dans la direction verticale (Y) entre les segments (5), et séparant les segments (5), et au moins quatre fentes diagonales (12) s'étendant dans la direction d'au moins une ligne diagonale de chaque segment (5).

7. Une unité de bobine à induction (1) selon la déclaration 5 ou 6, **est caractérisée en ce que** la couche conductrice (6) comprend quatre fentes diagonales (12) s'étendant dans la direction radiale depuis la découpe centrale (7) jusqu'aux découpes d'angle (8), en direction d'une seule ligne diagonale de chaque segment (5), et divisant chaque segment (5) en deux parties.

8. Une unité de bobine à induction (1) selon la déclaration 5 ou 6, **est caractérisée en ce que** la couche conductrice (6) comprend huit fentes diagonales (12) s'étendant dans la direction des deux lignes diagonales du segment (5), et divisant les segments (5) en quatre parties.

9. Une unité de bobine à induction (1) selon la déclaration 5 ou 6, **est caractérisée en ce que** la couche conductrice (6) d'une structure en plusieurs parties, appropriée pour être utilisée dans des cuisinières à chauffage par induction à pleine surface dans lesquelles une différence de phase de 0° ou 180° est appliquée entre les bobines (4), dans laquelle les extrémités des fentes horizontales, verticales et diagonales (10, 11, 12) sont jointes dans les points médians des bords sans faire de découpes latérales (8).

10. Une unité de bobine à induction (1) selon l'une quelconque des déclarations précédentes, **est caractérisée en ce que** la couche conductrice (6) comprend un matériau de remplissage (13) fait d'un matériau à base de polymère isolant thermiquement et électriquement sans propriétés magnétiques, permettant de joindre les segments (5) en remplissant les fentes horizontales, verticales et diagonales (10, 11, 12) et/ou les découpes centrales, latérales et d'angle (7, 8, 9).

11. Une unité de bobine à induction (1) selon la déclaration 10, **est caractérisée en ce que** la couche conductrice (6) comprend un matériau de remplissage (13) fait d'un matériau thermoplastique tel que le polypropylène (PP) ou le polystyrène (PS).

12. Une unité de bobine à induction (1) selon la déclaration 1 ou 2, **est caractérisée en ce que** la couche conductrice (6) convient à l'utilisation dans des cuisinières à chauffage par induction à surface pleine dans lesquelles une différence de phase de 180° est appliquée entre les bobines (4), la couche conductrice (6) ayant une structure continue en une seule pièce et comprenant des ponts (14) reliant les segments (5) et les pièces de segments (5) les unes aux autres.

13. Une unité de bobine à induction (1) selon la déclaration 12, **est caractérisée en ce que** la couche conductrice (6) comprend des fentes diagonales (12) de structure monobloc, s'étendant dans des directions angulaires séparées des lignes diagonales et ne se croisant pas entre elles.

14. Une cuisinière à chauffage par induction à surface pleine **est caractérisée en ce qu'elle** comporte une unité de bobine à induction (1) selon l'une des revendications précédentes.
